# FASCICULE DE BREVET EUROPEEN

(11) **EP 3 578 838 B1**
(45) Date de publication et mention de la délivrance du brevet: **13.01.2021**
(21) Numéro de dépôt: 19179118.5
(22) Date de dépôt: 07.06.2019
(51) Int. Cl.: F16C 29/00, B25J 5/02, F16C 11/06

(54) **DISPOSITIF DE GUIDAGE LINÉAIRE**
LINEARE FÜHRUNGSVORRICHTUNG
LINEAR GUIDANCE DEVICE

(30) Priorité: 07.06.2018 FR 1854940
(43) Date de publication de la demande: 11.12.2019
(73) Titulaire: FIVES CINETIC, 70400 Hericourt (FR)
(72) Inventeur: LESCARMONTIER, Vincent, 70400 HERICOURT (FR); MARTIN, Alexandre, 70400 HERICOURT (FR)
(74) Mandataire: Lavoix

(56) Documents cités:
- WO-A1-2009/107602
- DE-A1- 10 355 972
- DE-A1-102009 011 438
- US-A- 5 388 913

## Description

La présente invention se rapporte au domaine des dispositifs de guidage linéaire. Plus particulièrement, ces dispositifs permettent la translation d'un élément disposé sur un ou plusieurs desdits dispositifs de guidage linéaire. Ce type de dispositif permet généralement de déplacer un élément de façon contrôlée, tout en connaissant sa position le long d'un axe défini, par exemple le long de rails.

Généralement, un dispositif de guidage linéaire comprend un patin et au moins un rail sur lequel le patin est monté de manière mobile. Le patin comprenant par exemple une cavité qui coopère avec le rail et comprenant un certain nombre d'éléments roulants permettant au patin de glisser le long dudit rail. L'élément à déplacer est fixé sur une partie supérieure du dispositif de guidage linéaire, ainsi le déplacement, le long du rail, du patin permet de déplacer l'élément fixé sur celui-ci. Un dispositif de guidage linéaire combinant des patins mobiles et des liaisons rotules suivant le préambule de la revendication 1 est divulgué dans le document US 5,388,933 A.

Néanmoins, lorsqu'un élément, par exemple un robot multiaxe, est fixé sur un dispositif de guidage linéaire et que ce dernier présente un poids important pour le rail et/ou que ledit élément est lui-même mobile, en rotation et/ou en translation, il y a alors apparition de phénomènes de vrillage du rail.

En effet, en fonction du déplacement du centre d'inertie d'un robot et des accélérations/décélérations dudit robot le long du rail, cela entraine des contraintes inhomogènes sur le rail. C'est-à-dire que le rail, sous l'effort, subit un effet de torsion qui entraîne un défaut de parallélisme local, c'est-à-dire une rotation locale du rail autour de son axe longitudinal.

Il peut aussi arriver que le rail et/ou que la structure sur lequel repose le rail soient de mauvaise qualité et qu'ainsi l'ensemble présente des défauts intrinsèques de parallélisme.

Cela a par exemple pour conséquence, un décalage arbitraire entre la position estimée et la position réelle, ce qui peut être dommageable par exemple lors de l'utilisation d'un robot multiaxe, surtout au niveau de la répétabilité des opérations/déplacements effectués par un robot.

De plus, le vrillage du rail provoque des contraintes inhomogènes au niveau de la liaison glissière patin-rail entrainant une usure plus rapide des éléments assurant ladite liaison glissière.

On notera dans les cas où il y a deux rails, il y a généralement un rail sur lequel sont montés des patins et un autre rail sur lequel sont montés un ou plusieurs dispositifs de guidage linéaire, néanmoins, chacun des rails peut également être équipé de dispositifs de guidage linéaire.

Ainsi, la présente invention vise à remédier à au moins un des inconvénients évoqués ci-dessus et à proposer un nouveau type de dispositif de guidage linéaire selon la revendication 1, le dispositif comprenant un patin configuré pour être mobile le long d'un rail, un châssis relié au patin, ledit châssis étant configuré pour servir de support à un élément destiné à être déplacé, le châssis étant relié au patin par l'intermédiaire d'une liaison rotule et le châssis étant relié au patin par l'intermédiaire d'une liaison glissière.

On notera que l'axe de translation de ladite liaison glissière est par exemple orthogonal à l'axe de déplacement du dispositif de guidage linéaire le long d'un rail.

Selon une autre caractéristique possible, la liaison glissière et la liaison rotule sont distinctes, par exemple mécaniquement.

Selon une autre caractéristique possible, la liaison glissière et la rotule sont une même liaison, par exemple une liaison linéaire-annulaire.

Selon une autre caractéristique possible, le dispositif comprend un bloc rotule formant la liaison rotule, ledit bloc rotule traversant le châssis et étant relié audit patin.

Selon une autre caractéristique possible, le bloc rotule forme une liaison de type rotule entre le châssis et le patin.

Selon une autre caractéristique possible, ledit dispositif selon l'invention comprend une pièce de liaison qui est, d'une part, fixée au patin et, d'autre part, sur laquelle est fixé le bloc rotule.

Selon une autre caractéristique possible, ledit bloc rotule comprend :
- au moins un élément formant liaison rotule ;
- un corps principal dans lequel est aménagé un logement dans lequel est logé ledit au moins un élément formant liaison rotule.

Selon une autre caractéristique possible, le bloc rotule comprend une pièce cylindrique s'étendant à travers ledit corps principal et l'élément formant liaison rotule et venant coopérer avec la pièce de liaison.

Selon une autre caractéristique possible, ledit bloc rotule comprend un moyen de fixation s'étendant à travers la pièce cylindrique et la pièce de liaison de manière à fixer le bloc rotule à la pièce de liaison.

Selon une autre caractéristique possible, la pièce de liaison et la pièce cylindrique sont une seule et même pièce monobloc.

Selon une autre caractéristique possible, le dispositif comprend un couvercle configuré pour précontraindre ledit au moins un élément formant liaison rotule.

Selon une autre caractéristique possible, le bloc rotule comprend deux rotules à contact oblique agencées de manière à ce que leurs centres de rotation coïncident.

L'invention concerne également un élément destiné à être déplacé, tel qu'un robot multiaxe et/ou une machine-outil, caractérisé en ce qu'il comprend au moins un dispositif de guidage linéaire tel que décrit ci-dessus.

L'invention sera mieux comprise, et d'autres buts, détails, caractéristiques et avantages de celles-ci apparaîtront plus clairement au cours de la description suivante d'un mode de réalisation particulier de l'invention, donnée uniquement à titre illustratif et non limitatif, en référence aux dessins annexés, sur lesquels :
- la figure 1 représente une vue schématique en perspective de haut de dispositifs de guidage linéaire selon l'invention ;
- la figure 2 est une vue très schématique des liaisons dans un dispositif de guidage linéaire représenté à la figure 1 ;
- la figure 3 est une vue schématique en perspective d'un dispositif de guidage linéaire de la figure 1 ;
- la figure 4 est une vue schématique et éclaté d'un dispositif de guidage linéaire représenté à la figure 1 ;
- la figure 5 est une vue schématique en coupe longitudinale d'un dispositif de guidage linéaire représenté à la figure 1.

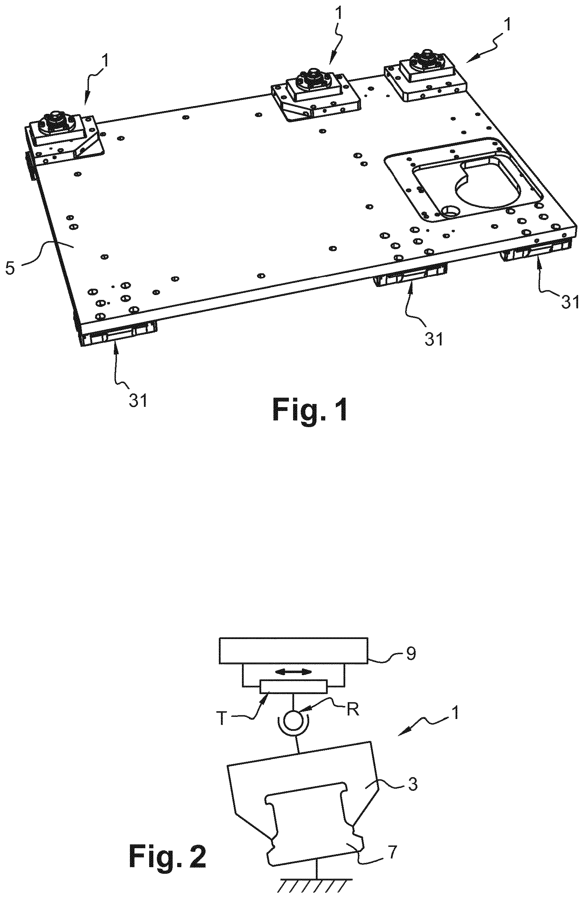

La figure 1 est une vue schématique en perspective du dessus, d'une part, de plusieurs dispositifs de guidage linéaire 1 selon l'invention et, d'autre part, de patins 31 reliés l'un à l'autre par une plaque 5 de support. La plaque de support 5 a, par exemple, pour fonction de servir de support à un élément à déplacer, tel qu'un robot multiaxe.

Les dispositifs de guidage linéaire 1 et les patins 31 sont chacun engagés respectivement dans un rail (non représentés). Lesdits rails sont disposés parallèlement l'un par rapport à l'autre. Les dispositifs 1 et les patins 31 sont configurés pour glisser le long des rails, ainsi, un robot fixé sur la plaque 5 est déplacé par l'intermédiaire des dispositifs 1 et des patins 31.

Un patin 31 présente généralement une forme allongée, ainsi qu'une cavité (ou logement) configurée pour coopérer avec un rail dans laquelle sont disposés des éléments roulants, tels que des billes ou des rouleaux. La coopération des éléments roulants de la cavité du patin avec le rail permet le déplacement (tel qu'un glissement) du patin 31 le long dudit rail.

La figure 2 est une vue très schématique, et en coupe transversale, d'un dispositif de guidage linéaire 1 engagé dans un rail 7, les liaisons mécaniques entre les composants dudit dispositif 1 y sont représentées de manière symbolique. Plus particulièrement, ledit dispositif 1 comprend un patin 3 et un châssis 9 relié sur le patin 3. On notera que le patin 3 présente des caractéristiques similaires au patin 31 décrit ci-dessus. Ledit châssis 9 est configuré pour servir de support directement à un élément destiné à être déplacé par le dispositif de guidage linéaire ou, comme cela est représenté à la figure 1, par l'intermédiaire d'une plaque de support 5 sur laquelle l'élément à déplacer est fixé.

Le châssis 9 est relié au patin 3 par l'intermédiaire d'une liaison rotule R.

De plus, le châssis 9 est également relié au patin 3 par l'intermédiaire d'une liaison glissière T. Ainsi, les éléments suivants sont reliés directement et successivement : le patin 3, la liaison rotule R, la liaison glissière T et le châssis 9 (ainsi la liaison glissière T est reliée directement à la liaison rotule R et au châssis 9, et la liaison rotule R est reliée directement à la liaison glissière T et au patin 3).

La liaison glissière T entre le châssis 9 et le patin 3 présente un axe de translation orthogonal à l'axe de déplacement du dispositif de guidage linéaire le long du rail 7 (c'est-à-dire à l'axe longitudinal du rail 7).

On notera ainsi que la figure 2 est une représentation très schématique où le rail 7 se déforme et entraîne un décalage angulaire du patin 3 par rapport à la normale, et non par un déplacement angulaire du rail 7 dans sa globalité tel que cela est représenté. Cependant, on constate que la liaison rotule R entre le patin 3 et le châssis 9 permet, lorsque le rail 7 vrille sous des contraintes, d'autoriser un mouvement relatif de rotation entre le châssis 9 et le patin 3 monté sur le rail 7. Ainsi, le patin 3 accompagne le rail 7 de façon à ce que les contraintes exercées sur les éléments roulants par le rail 7 ne soient pas excessives et n'entraînent pas une usure prématurée de ceux-ci. Tandis que le châssis 9 reste sensiblement horizontal (c'est-à-dire qu'il reste parallèle au sol). Il y a ainsi un découplage en rotation du châssis 9 et du patin 3.

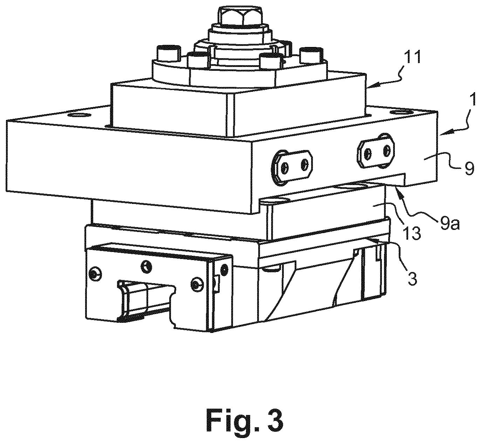

La figure 3 est une vue agrandie et en perspective d'un dispositif de guidage 1 de la figure 1.

Ainsi, comme décrit ci-dessus, ledit dispositif 1 comprend un patin 3 et un châssis 9, ainsi qu'un bloc rotule 11 qui traverse le châssis 9 et qui est fixé audit patin 3. C'est le bloc rotule 11 qui forme une liaison de type rotule entre le châssis 9 et le patin 3.

Le châssis 9, quant à lui, loge la liaison glissière T, dont l'axe de translation est sensiblement orthogonal à l'axe longitudinal du rail (c'est-à-dire sensiblement orthogonal à la direction de translation du dispositif de guidage linéaire le long du rail).

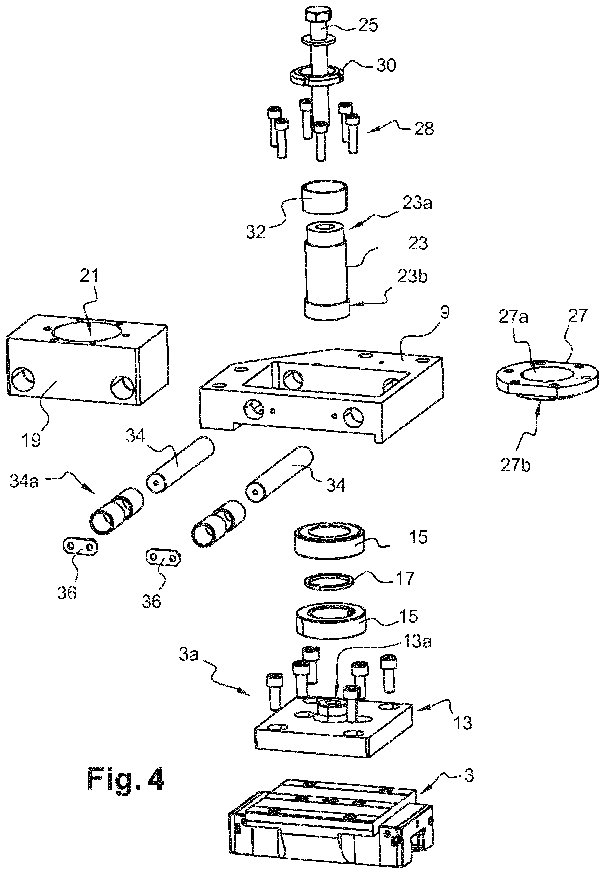

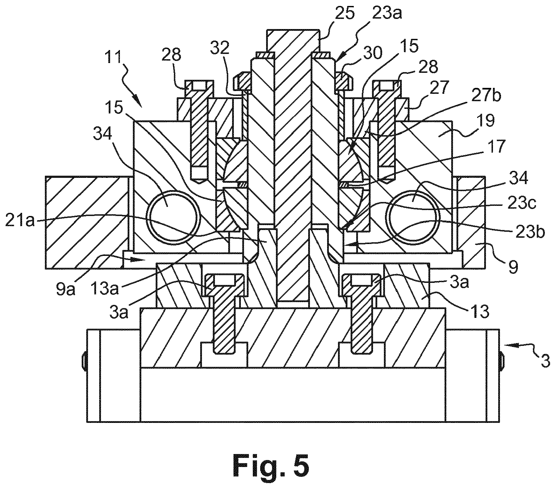

Ledit dispositif 1 comprend une pièce de liaison 13 qui est, d'une part, fixée au patin 3 et, d'autre part, sur laquelle est fixé le bloc rotule 11. La pièce de liaison 13 est ainsi fixée au patin 3 par des moyens de fixation 3a, tels que des vis, des écrous... (visibles aux figures 4 et 5).

Ainsi, dans ce mode de réalisation, le patin 3, la pièce de liaison 13 et le bloc rotule 11 sont montés de manière empilée. Le châssis 9 est traversé par au moins une partie du bloc rotule 11 et est donc disposé au-dessus (et en regard) de la pièce de liaison 13.

De plus, la pièce de liaison 13 fait office de butée à la rotation du bloc rotule 11. Plus particulièrement, le châssis 9 comprend, sur sa face en regard de la pièce de liaison 13 (face inférieure lorsque le dispositif 1 est monté sur un rail), un évidement 9a dans lequel une partie de la pièce de liaison 13 vient s'insérer (plus particulièrement visibles aux figures 3 à 5). Ainsi, lorsqu'il y a un mouvement relatif de rotation entre le châssis 9 et la pièce de liaison 13, ces éléments 13 et 9 vont se rapprocher jusqu'à entrer en contact, bloquant ainsi le mouvement de rotation. La distance entre le châssis 9 et la pièce de liaison 13 peut être ainsi ajustée en fonction de l'angle de rotation maximal souhaité.

La figure 4 est une vue schématique éclatée, et en perspective, d'un dispositif selon l'invention, tandis que la figure 5 est une vue en coupe longitudinale du même dispositif.

On peut voir aux figures 4 et 5 que le bloc rotule 11 comprend :
- au moins un élément 15, 17 formant liaison rotule R□;
- un corps principal 19 dans lequel est aménagé un logement 21 dans lequel est logé ledit au moins un élément 15, 17 formant liaison rotule R. Le logement 21 est une ouverture traversante aménagée dans l'épaisseur du corps principal 19.

Dans le mode de réalisation décrit, ledit au moins un élément formant liaison rotule R comprend deux rotules 15, telles que des rotules à contact oblique, agencées de manière à ce que leurs centres de rotation coïncident. Une rotule à contact oblique comprend généralement deux parties, un anneau externe fixe et un anneau interne rotatif, l'interface entre les deux anneaux comprenant du téflon (il n'est ainsi pas nécessaire de mettre de la graisse).

De plus, il est avantageux qu'une rondelle 17 soit disposée entre les deux rotules 15 afin de maintenir une distance déterminée entre celles-ci (ceci dans une direction orthogonale à l'axe de translation du patin 3) pour garantir que leurs centres de rotation restent coïncidant.

Néanmoins, la liaison rotule R peut également être un ou plusieurs roulements rotulés ou des rotules de type axiale, radiale, etc.

Le bloc rotule 11 comprend une pièce cylindrique 23 s'étendant, par l'intermédiaire du logement 21, à travers le corps principal 19. Les rotules 15 et la rondelle 17 sont emmanchées sur la pièce cylindrique 23. La pièce cylindrique 23 est creuse, c'est-à-dire qu'elle présente un trou traversant s'étendant sur toute sa longueur. De plus, ladite pièce cylindrique 23 présente deux extrémités opposées, une première extrémité 23a et une deuxième extrémité 23b.

La deuxième extrémité 23b de la pièce cylindrique 23 vient coopérer avec la pièce de liaison 13. La coopération entre la pièce cylindrique 23 et la pièce de liaison 13 se fait au niveau d'une protubérance 13a disposée sur la face de la pièce de liaison 13 en regard du châssis 9 (et également de la pièce cylindrique 23).

La protubérance 13a s'insère, au moins partiellement, dans la pièce cylindrique 23. De plus, la partie circonférentielle de la deuxième extrémité 23b de la pièce cylindrique 23 vient en butée contre un épaulement de la protubérance 13a, l'épaulement présentant un congé circonférentiel. Ce congé évite que des efforts horizontaux soient localisés en des endroits précis (en diffusant les contraintes entre les deux éléments 13 et 23) et ainsi éviter que la pièce cylindrique 23 et/ou la pièce de liaison 13 se fragilisent et ne finissent par casser.

De plus, la pièce cylindrique 23 présente sur sa face extérieure (face en regard du corps principal 19) un épaulement 23c qui, en coopération avec un épaulement 21a aménagé dans le logement 21 du corps principal, permet de positionner (et bloquer au moins d'un côté) lesdites rotules 15 dans le logement 21.

Par ailleurs, le bloc rotule 11 comprend un moyen de fixation 25, tel qu'une vis ou un boulon, qui s'insère à travers la pièce cylindrique 23 et pénètre dans une ouverture aménagée dans la protubérance 13a.

Le moyen de fixation 25 permet ainsi de fixer le bloc rotule 11 à la pièce de liaison 13 (et donc par extension au patin 3).

Le bloc rotule 11 comprend en outre un couvercle 27, par exemple de forme sensible annulaire, fixé au corps principal 19 par l'intermédiaire de moyens de fixation 28, tels que des vis, des boulons...

Le couvercle 27 présente par ailleurs une ouverture traversante 27a dans laquelle la pièce cylindrique 23 et le moyen de fixation 25 sont logés, ainsi qu'un épaulement cylindrique 27b s'étendant dans le logement 21 du corps principal 19 et venant en appui contre une des rotules 15. Cet épaulement cylindrique 27b a pour fonction de bloquer en translation les rotules 15, mais également de précontraindre mécaniquement les éléments 15, 17 formant liaison rotule R, et plus particulièrement, l'anneau externe d'une des rotules 15 à contact oblique. En outre, le bloc rotule 11 comprend un écrou 30 à encoche et une entretoise 32 présentant une forme en section de tube.

L'entretoise 32 est montée sur la première extrémité 23a de la pièce cylindrique 23 et vient en appui contre l'anneau interne d'une des rotules 15. L'entretoise 32 traverse le couvercle 27 pour venir au contact d'une rotule 15.

L'écrou 30 est également monté sur la première extrémité 23a de la pièce cylindrique 23, au contact de l'entretoise 32. L'écrou 30 permet, par l'intermédiaire de l'entretoise 32, de précontraindre mécaniquement, au moins en partie, les éléments formant la liaison rotule R.

On notera qu'un ou plusieurs des éléments suivants sont montés de manière concentrique les uns par rapport aux autres : la pièce cylindrique 23, les rotules 15, l'entretoise 17, l'entretoise 32, l'écrou à encoche 30 et/ou le couvercle 27.

Le châssis 9 loge en outre deux axes 34, ici deux cylindres portant des bagues 34a (par exemple en bronze), traversant le châssis 9 dans son plan d'extension principal, ainsi que le corps principal 19 du bloc rotule 11 (des trous traversants étant prévus dans chacune des pièces 9 et 19). Les bagues 34a, quant à elles, sont montées serrées dans les trous traversants du corps principal 19 (les axes 34 étant montés glissants dans le corps principal 19).

Les axes 34 sont orientés orthogonalement à la direction de déplacement du dispositif de guidage linéaire 1 (c'est-à-dire orthogonalement à l'axe longitudinal du rail).

Ces axes 34 permettent un mouvement relatif de translation entre le châssis 9 et le bloc rotule 11. Plus particulièrement, lesdits axes 34 en coopération avec le corps principal 19 et le châssis 9 forment la liaison glissière T.

Le châssis 9 comprend également des plaques de fixation 36 configurées pour bloquer ou verrouiller la translation et/ou la rotation des axes 34 par rapport au châssis 9.

Dans un autre mode de réalisation non représenté, les liaisons glissière et rotule sont une seule et même liaison, par exemple une liaison du type linéaire-annulaire.

Dans un autre mode de réalisation non représenté, la pièce de liaison 13 et la pièce cylindrique 23 sont une pièce unique et monobloc.

## Revendications

1. Dispositif de guidage linéaire (1) pour un élément (5) destiné à être déplacé qui comprend :
- un patin (3) configuré pour être mobile le long d'un rail (7),
- un châssis (9) relié au patin (3),
ledit châssis (9) étant configuré pour servir de support à l'élément (5) et étant relié au patin (3) par l'intermédiaire d'une liaison rotule (R), **caractérisé en ce que** le châssis (9) est relié au patin (3) par l'intermédiaire d'une liaison glissière (T).

2. Dispositif selon la revendication 1, dans lequel la liaison glissière (T) et la liaison rotule (R) sont distinctes.

3. Dispositif selon l'une quelconque des revendications précédentes, **caractérisé en ce qu'**il comprend un bloc rotule (11) formant la liaison rotule (R), ledit bloc rotule (11) traversant le châssis (9) et étant relié audit patin (3).

4. Dispositif selon la revendication précédente, **caractérisé en ce qu'**il comprend une pièce de liaison (13) qui est, d'une part, fixée au patin (3) et, d'autre part, sur laquelle est fixé le bloc rotule (11).

5. Dispositif selon la revendication 3 ou 4, **caractérisé en ce que** le bloc rotule (11) comprend :
- au moins un élément (15) formant liaison rotule (R) ;
- un corps principal (19) dans lequel est aménagé un logement (21) dans lequel est logé ledit au moins un élément (15) formant liaison rotule (R).

6. Dispositif selon l'une quelconque des revendications 3 à 5, **caractérisé en ce que** le bloc rotule (11) comprend une pièce cylindrique (23) s'étendant à travers le corps principal (19) et l'élément (15) formant liaison rotule (R) et venant coopérer avec la pièce de liaison (13).

7. Dispositif selon la revendication précédente, **caractérisé en ce que** le bloc rotule (11) comprend un moyen de fixation (25) s'étendant à travers la pièce cylindrique (23) et la pièce de liaison (13) de manière à fixer le bloc rotule (11) à la pièce de liaison (13).

8. Dispositif selon l'une quelconque des revendications 3 à 7, **caractérisé en ce que** le bloc rotule (11) comprend deux rotules (15) à contact oblique agencées de manière à ce que leurs centres de rotation coïncident.

9. Elément (5) destiné à être déplacé, **caractérisé en ce qu'**il comprend au moins un dispositif (1) de guidage linéaire selon l'une quelconque des revendications précédentes.

## Patentansprüche

1. Linearführungsvorrichtung (1) für ein Element (5), das dazu bestimmt ist, verlagert zu werden, aufweisend:
- ein Gleitstück (3), das konfiguriert ist, um entlang einer Schiene (7) bewegbar zu sein,
- einen Rahmen (9), der mit dem Gleitstück (3) verbunden ist,
wobei der Rahmen (9) konfiguriert ist, um als Halter für das Element (5) zu dienen, und mit dem Gleitstück (3) verbunden ist über eine Kugelgelenkverbindung (R), **dadurch gekennzeichnet, dass** der Rahmen (9) mit dem Gleitstück (3) verbunden ist über eine Gleitverbindung (T).

2. Vorrichtung gemäß Anspruch 1, wobei die Gleitverbindung (T) und die Kugelgelenkverbindung (R) individuell sind.

3. Vorrichtung gemäß irgendeinem der vorhergehenden Ansprüche, **dadurch gekennzeichnet, dass** sie aufweist einen Kugelgelenkblock (11), der die Kugelgelenkverbindung (R) bildet, wobei der Kugelgelenkblock (11) durch den Rahmen (9) hindurch verläuft und mit dem Gleitstück (3) verbunden ist.

4. Vorrichtung gemäß dem vorhergehenden Anspruch, **dadurch gekennzeichnet, dass** sie aufweist ein Verbindungsstück (13), das einerseits am Gleitstück (3) befestigt ist und an dem andererseits der Kugelgelenkblock (11) befestigt ist.

5. Vorrichtung gemäß Anspruch 3 oder 4, **dadurch gekennzeichnet, dass** der Kugelgelenkblock (11) aufweist:
- wenigstens ein Kugelgelenkverbindung(R)-bildendes Element (15),
- einen Hauptkörper (19), in welchem eine Aufnahme (21) vorliegt, in welcher das wenigstens eine Kugelgelenkverbindung(R)-bildende Element (15) aufgenommen ist.

6. Vorrichtung gemäß irgendeinem der Ansprüche 3 bis 5, **dadurch gekennzeichnet, dass** der Kugelgelenkblock (11) ein zylindrisches Stück (23) aufweist, das sich durch den Hauptkörper (19) und das Kugelgelenkverbindung(R)-bildende Element (15) hindurch erstreckt und das in Zusammenwirkung mit dem Verbindungsstück (13) kommt.

7. Vorrichtung gemäß dem vorhergehenden Anspruch, **dadurch gekennzeichnet, dass** der Kugelgelenkblock (11) ein Befestigungsmittel (25) aufweist, das sich durch das zylindrische Stück (23) und das Verbindungsstück (13) erstreckt, um den Kugelgelenkblock (11) an dem Verbindungsstück (13) zu befestigen.

8. Vorrichtung gemäß irgendeinem der Ansprüche 3 bis 7, **dadurch gekennzeichnet, dass** der Kugelgelenkblock (11) zwei Schrägkontakt-Kugelgelenkteile (15) aufweist, die angeordnet sind, sodass ihrer Drehzentrenten zusammenfallen.

9. Element (5), das dazu bestimmt ist, verlagert zu werden, **dadurch gekennzeichnet, dass** es aufweist wenigstens eine Linearführungsvorrichtung (1) gemäß irgendeinem der vorhergehenden Ansprüche.

## Claims

1. Linear guidance device (1) for an element (5) intended to be moved, which device comprises:
- a block (3) configured to be movable along a rail (7),
- a frame (9) connected to the block (3), said frame (9) being configured to be used as a support for the element (5) and being connected to the block (3) by means of a ball joint (R), **characterised in that** the frame (9) is connected to the block (3) by means of a sliding connection (T).

2. Device according to claim 1, wherein the sliding connection (T) and the ball joint (R) are separate.

3. Device according to either of the preceding claims, **characterised in that** it comprises a ball joint unit (11) which forms the ball joint (R), said ball joint unit (11) passing through the frame (9) and being connected to said block (3).

4. Device according to the preceding claim, **characterised in that** it comprises a connecting part (13) which is fixed to the block (3) and on which the ball joint unit (11) is fixed.

5. Device according to either claim 3 or claim 4, **characterised in that** the ball joint unit (11) comprises:
- at least one element (15) forming the ball joint (R);
- a main body (19), in which a housing (21) which houses said at least one element (15) forming the ball joint (R) is arranged.

6. Device according to any of claims 3 to 5, **characterised in that** the ball joint unit (11) comprises a cylindrical part (23) which extends through the main body (19) and the element (15) forming the ball joint (R) and comes to engage with the connecting part (13).

7. Device according to the preceding claim, **characterised in that** the ball joint unit (11) comprises a fixing means (25) which extends through the cylindrical part (23) and the connecting part (13) so as to fix the ball joint unit (11) to the connecting part (13).

8. Device according to any of claims 3 to 7, **characterised in that** the ball joint unit (11) comprises two angular-contact ball joints (15) arranged such that their centres of rotation coincide.

9. Element (5) intended to be moved, **characterised in that** it comprises at least one linear guidance device (1) according to any of the preceding claims.
